Europäisches Patentamt

European Patent Office

Office européen des brevets

(11) Publication number: **0 090 137**
**A2**

# EUROPEAN PATENT APPLICATION

(21) Application number: **83100695.2**

(22) Date of filing: **26.01.83**

(51) Int. Cl.³: **G 06 F 13/00**

(30) Priority: **29.03.82 US 362827**

(43) Date of publication of application: **05.10.83 Bulletin 83/40**

(84) Designated Contracting States: **DE FR GB**

(71) Applicant: **International Business Machines Corporation, Old Orchard Road, Armonk, N.Y. 10504 (US)**

(72) Inventor: **Bardsley III, Henry, 13169 Stewart Court, Saratoga California 95070 (US)**
Inventor: **Hasbrouck, Leo John, 13076 Glen Brae Drive, Saratoga California 95070 (US)**

(74) Representative: **Killgren, Nell Arthur, IBM United Kingdom Patent Operations Hursley Park, Winchester, Hampshire, SO21 2JN (GB)**

(54) **Access control system for digital data storage device.**

(57) A system for ensuring writing synchronism of a character string into non-contiguous blocks of buffer storage by updating the contents of the buffer address register BAR during writing as a function of the scanned contents of a block availability vector developed by logic (35, 37) from data specifying block availability (33) and buffer storage requirements (25).

ADDRESS LOGIC CONTROL

ACTORUM AG

SA9-81-043

## ACCESS CONTROL SYSTEM FOR DIGITAL
## DATA STORAGE DEVICE

This invention relates generally to access control systems for digital data storage devices, and more particularly to the transfer of variable length records to and from buffer storage arranged between a group of central processing units (CPU's) and shared storage devices such as direct access storage devices (DASD's).

In the past the cost of buffer storage has limited the amount of intermediate buffering available for such transfers. Consequently, considerable attention has been given to the optimisation of the paths interconnecting the CPU's and the storage devices. For example, our United States Patent No. 3,725,864, describes the transfer of data between a CPU and a selected storage device using paths established by a control unit communicating with the input/output channel of the CPU on one side and the selected device on the other side. Our United States Patent No. 4,207,609 describes an arrangement in which each CPU can reserve a device over one channel and be capable of starting an I/O operation to the same device over a second channel. If the first channel is busy, the operations can still be initiated immediately rather than waiting for that channel to become available.

As the cost of random access memory (RAM) has decreased, the potential of buffer storage intermediate multiple CPU's and commonly accessed devices such as DASD has been more significant. In using buffer storage effectively the scheduling and allocation of buffer space is a critical factor.

2

A large number of current DASD devices use the so-called Count Key DATA (CKD) architecture for recording data. This architecture, which is described in detail in our US Patent No. 4,262,332, employs three distinct fields, a count field, a key field, and a data field in association with a record, separated by gaps. The count and key fields contain information relative to the record. The data field is of variable length and contains the data or information portion on the record. Reading and writing of CKD records is performed under the control of channel control words (CCW's) separately resident in each CPU main store. These must be fetched decoded, and transmitted to the control device for execution on the DASD. As described in US Patent No. 4,207,609, previously referred to, the relationship of the CPU to a DASD begins when the CPU invokes a START I/O instruction which causes control of data transfer to be relinquished to a series of CCW's in the input/output channel of the CPU. For each operation (CCW) in the channel program, one or more counterpart operations are required either at the control unit or device level over an active connection. The CCW sequence may be discontinuously executed, and whilst intermediate buffering permits a higher degree of asynchronism between the movement of data from a channel to a storage control unit and from the storage control unit to a recording DASD and vice versa the data streaming attendant to buffer read/write operation can cause overrun and underflow problems. These were managed by monitoring the separation between write and read addresses in buffer address registers and inhibiting channel operations when the separation drops below a critical level. Examples of this approach are shown in US Patents Nos. 3,748,652 and 3,818,461, issued 18 June 74 and in the IBM Technical Disclosure Bulletin, pages 374-375, September 1966 in an article entitled "Sequential Access Buffer Control".

Whilst these prior art arrangements go some way towards using buffer storage efficiently, they do not make full use of information which is often available on the precise buffer storage requirements of a particular writing operation, for example when writing variable length records CKD formatted into non-contiguous blocks of linearly addressed buffer storage.

Accordingly the present invention provides an access control system for a digital data storage device arranged to provide access to fixed block buffer recording areas under the control of a buffer address register in response to applied instructions calling for the writing of records of various lengths extending beyond block boundaries, the system comprising a block usage register arranged to register the number of blocks required by a particular instruction, logic means arranged to develop a block availability vector identifying blocks within said storage device available to meet the requirements specified by said block usage register, and control means for updating said buffer address register as a record writing operation progresses under the control of said block availability vector.

This arrangement permits synchronous availability of fixed block buffer recording areas during the buffer writing of character strings at block boundaries by using the block availability vector to update the buffer address register contents in the course of the buffer writing operation.

A preferred embodiment of the invention to be described below performs the steps prior to writing of (a) ascertaining the required number of storage blocks, (b) forming a block availability vector from a commonly stored buffer status map until the required available

4

blocks are allocated, and (c) during both writing and reading, altering the buffer location counter contents at block boundaries with the address corresponding to the bit position contents of the .availability vector.

In order that the invention may be well understood, this embodiment will now be described with reference to the drawings, in which:-

FIG. 1 depicts a storage control unit coupling multiple CPU's to multiple storage devices to permit shared access.

FIG. 2 depicts a RAM buffer with asynchronously operating ports for the reading and writing of variable length character streams therefrom.

FIG. 3 shows the address control logic modifiable by the block availability vector according to the invention.

FIG. 4 illustrates the relations between block availability vectors and their use with the buffer address registers.

The Buffer and Storage Control Unit Context

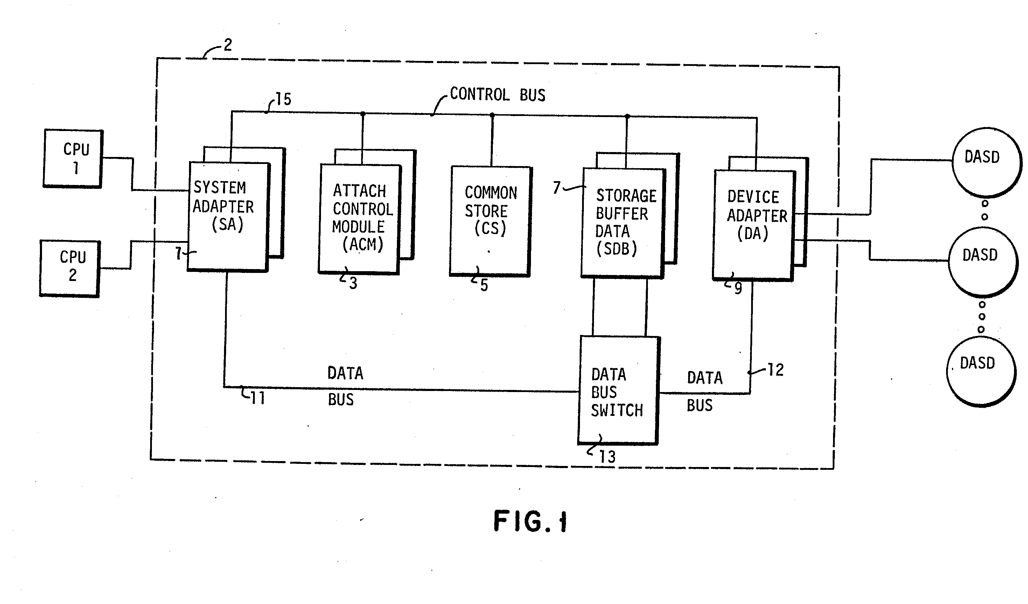

Referring now to FIG. 1, there is shown a storage control unit 2 intermediate a plurality of CPU and DASD. Each CPU channel terminates in a counterpart system adapter 1 while each DASD terminates in a counterpart device adapter 9. CCWs are shunted by the system adapter over control bus 15 where they are interpreted by a microprocessor in the form of an attachment control module (ACM) 3 responsive to microcode control sequences stored in common store 5. A storage data buffer 7 is controlled off of control bus 15 and is attached to a separate data bus by way of data bus switch 13. A READ CCW would be interpreted by the ACM to move data from a designated DASD through its device adapter over data bus 12, switch 13 for storage within buffer 7. At a time subsequent, said buffer store data would move therefrom over switch 13, bus 11 to the counterpart system adapter and CPU. Likewise, a WRITE CCW would be construed as a movement of streamed variable length CKD formatted data through the system adapter, data bus 11, switch 13, into buffer 7. At a time subsequent to movement from the buffer, switch 13, bus 12, device adapter, and DASD would be engendered.

## RAM Buffer and Asynchronously Operating Ports

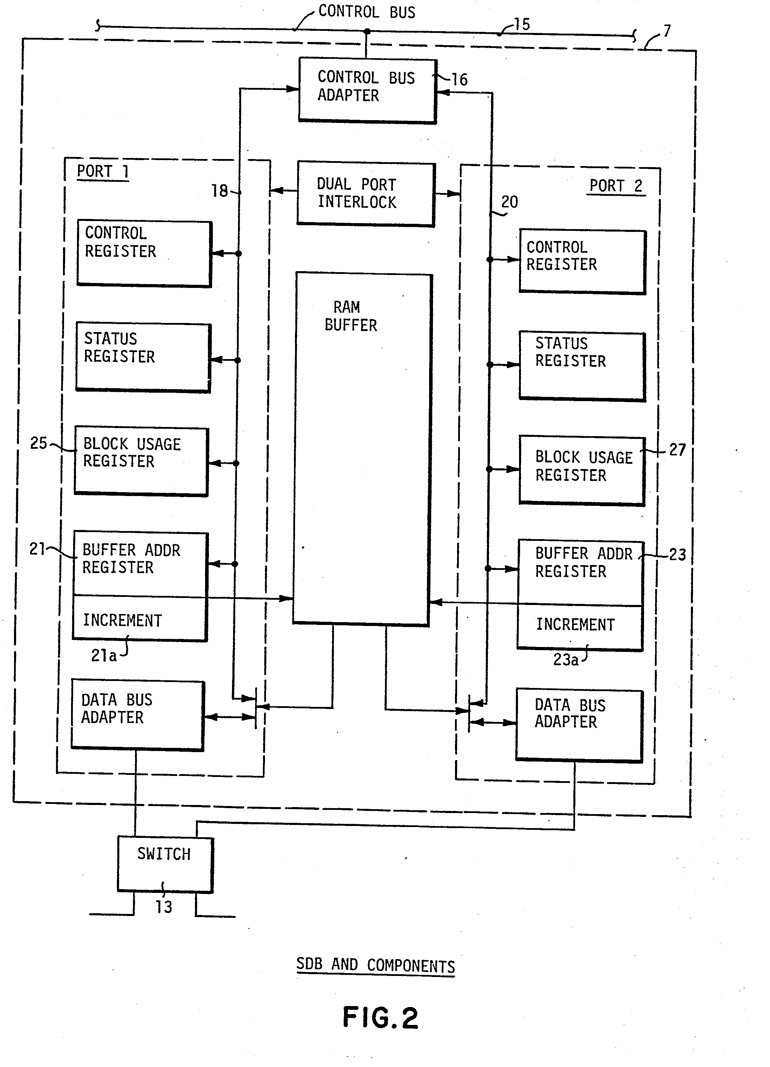

Referring now to FIG. 2, there is shown a RAM buffer with asynchronously operating ports for the reading and writing of variable length character streams therefrom. The buffer includes two identical ports, each of which provides a path between the buffer data and a data bus. Significantly, each port can address (access) all of the buffer data. The ports are asynchronous and can be adapted to perform a dual port interlock FIFO buffering operation. A buffer is controlled by way of signals over bus 15 through adapter 16 over respective control distribution leads 18 and 20. Each port includes an incrementable buffer address register (BAR) 21,23, a block usage register (BUR) 25,27 whose contents modify the operation of the counterpart BAR. A data bus adapter switchably interconnects the RAM buffer output through switch 13 to the data busses 11 and 12.

## Block Availability Vectors and Address Register
## Modification

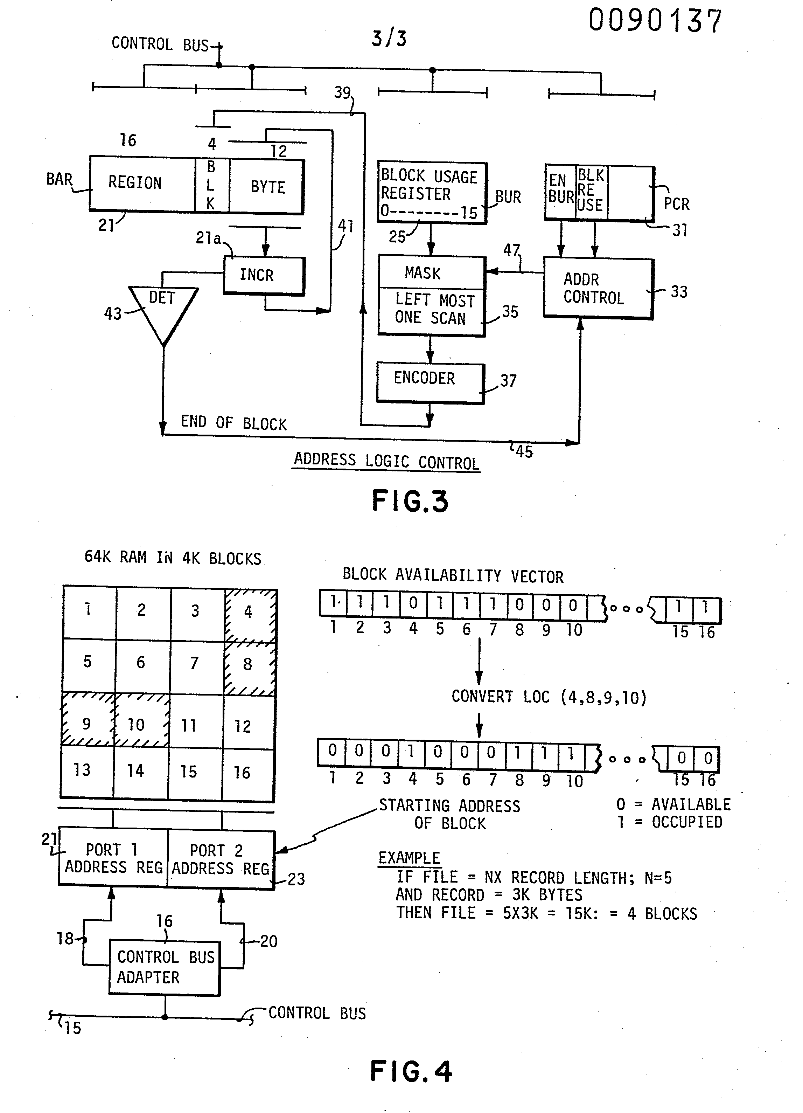

Referring now to FIG. 4, a RAM buffer of 64 kilobyte capacity is depicted as being segmented into 16 four-kilobyte blocks. Furthermore, the address register is strobed so that continuous byte locations are synchronously available with the byte of a streaming variable length CKD record being applied to buffer 7 through switch 13 and the data bus adapters. Thus, in order to manage fragmented available buffer space, additional registers and controls modifying the address registers are required. These are illustrated in address control logic of FIG. 3. The control logic includes a four-byte BAR 21 which maintains the current buffer address. The high order 16 bits determines which region in the illustrative 64 kilobyte space is specified. Since each region is divided into 16 four-kilobyte blocks, then the next four bits select the block number. The low order 12 bits determine the byte address within a block. Connected to the low order 12 bits in the BAR is incrementer 21A. The incrementer is used to update the buffer address as transfers are made. The incrementer includes a high order detector 43 which determines when the end of block (EOB) condition occurs. Also, there is a path from incrementer 21A to the low order 12 bit positions within the BAR over path 41. The control logic further includes the buffer usage register 25, a mask and left-most scan apparatus 35, and an encoder 37 which are coupled to the 4-bitwide block address portion in BAR over path 39. A port control register (PCR) 31 is shown coupled to an address controller 33. The address controller 33 is responsive to the EOB signal from detector 43 on path 45 as well as signals from the PCR. This is used to set or modify the mask contents by way of a signal impressed on lead 47.

PCR 31 is a two-byte control register used to initiate and specify the data transfer operation, i.e. READ and WRITE of the buffer. Two-bits in the PCR control the BUR operation. A first bit entitled "enable BUR bit" activates all of the logic related to automatic block address up-date capabilities. If this bit is "off", then the contents of the BUR are ignored and each operation will be terminated by the EOB detection. Also, a "block reuse" bit in the PCR determines whether the block wrap-around will occur when all of the blocks in the BUR pattern have been used. If this bit is "off", then the operation terminates at the end of the first path through the specified set of blocks. If the bit is "on", the operation will continue to any number of passes through this set of blocks until it is terminated at the end of data stream as signaled on the data bus.

Assuming that a processing unit attached to the same control bus 15 common to the SDB 7 initializes the SDB registers anticipating a data transfer between a system adapter SA and the buffer or between the buffer and the dense adapter DA. One method for initialization involves a microprocessor loading the BAR with a starting address in the buffer. All three sections of the ADDRESS, REGION, BLOCK, and BYTE are loaded. Next, the microprocessor loads the BUR with the pattern in bit significant format of the 4-K blocks which are to be used in the operation. Finally, the microprocessor sets the PCR with the control bits to perform the operation. These register loading operations are all executed by way of the control bus. Illustratively, the enable BUR bit in the PCR is set "on" and the block reset bit is set "off". It is necessary that the left-most bit in the BUR corresponds to the original block address section.

The start of data transfer will cause the incrementer 21A to update the byte address in the BAR as each byte is transferred either in or out of the buffer. Detector 43 which senses the high-order carry out of the incrementer will determine when the EOB occurs. The detection of EOB is fed back to the address control logic 33. This causes a shift in the mask logic 35. This essentially covers the bit representing the block just used and causes a left-most 1 scan in order to find the next high order bit representing the next 4-K block to be used. The location of the next left-most order bit is fed to encoder 37. The next address gated into the BAR is the encoded block address and an all 0 byte address. The region address remains constant for the entire operation. Data transfer continues uninterrupted with the updating of the byte address.

This operation continues until EOB time, the left-most 1 logic finds no more unmasked 1 bits in the BUR. At this instance, the block reuse bit in the PCR is inspected. If it is "on", then it is moved to uncover all the bits in the BUR and the left-most 1 logic will select the first block to be used again. However, if at EOB time, the block reuse bit is not "on", then the operation is terminated when the last byte in the last block has been filled or emptied. No more transfer requests will be accepted beyond this point. Consequently, non-contiguous buffer blocks can be used to support a transfer of variable length records in synchronous fashion.

Referring again to FIG. 4, the ensuring of synchronous availability of fixed block non-contiguous buffer recording areas during buffer writings of character string at block boundaries requires modifying the block availability vector prior to writing and using a copy of the altered vector for changing the buffer address register contents during run time as by way of forming the left-most 1 scan on the vector. This in effect sets the starting address of the next available block synchronous with the data stream coming into the buffer over the bus.

## Operating Implications

It should be apparent that in the prior art buffering intermediate the channel and the DASD was to speed match comparably fast DASD data rate to slow channels. By substantially increasing intermediate buffering capacity and effectively decoupling the channels and devices, records selected to be off-loaded to the system adapter occurs as a function of both system adapter and channel availability. This means that the arrival order into the buffer is independent of the off-load order and vis-a-vis. Further, a premium is placed on scheduling the channel to move data into the buffer prior to executing a DASD SEEK. Both the randomizing order and scheduling tend to increase the fragmenting of available buffer space. This further enhances the criticality of ensuring writing synchronism of the character string into non-contiguous blocks of buffer storage by altering the buffer address register contents at WRITE time as a function of the scanned contents of a block availability vector.

It will be further understood by those skilled in this art that various other changes in the form and details may be made therein without departing from the spirit and scope of the invention.

0090137

10

CLAIMS

1    An access control system for a digital data storage device arranged to provide access to fixed block buffer recording areas under the control of a buffer address register in response to applied instructions calling for the writing of records of various lengths extending beyond block boundaries, the system comprising a block usage register arranged to register the number of blocks required by a particular instruction, logic means arranged to develop a block availability vector identifying blocks within said storage device available to meet the requirements specified by said block usage register, and control means for updating said buffer address register as a record writing operation progresses under the control of said block availability vector.

2    A system as claimed in Claim 1, for writing variable length count key data formatted character strings into non-contiguous blocks of linearly addressed buffer storage, in which the contents of said block usage requirements are derived from the record count field of the record associated with a particular writing instruction.

3    A system as claimed in Claim 1 or Claim 2 in which said logic means is adapted to form a bit map representation of block availability from a commonly stored buffer block status map, and to complement said bit map logically so that bits representing available block space assume a first Boolean value and said control means is adapted to scan said bit map for the next left-most position of said bit map for the block location whose availability is represented by said first Boolean value, and to alter the buffer address register contents at block boundaries during writing as the available blocks are filled.

4  A system as claimed in Claim 3 in which said control means is further adapted to update the buffer address register contents during reading of the buffer as filled blocks are emptied.

0090137

FIG. 1

SDB AND COMPONENTS

FIG.2

0090137

3/3

CONTROL BUS

REGION | BLK | BYTE
16 | 4 | 12
BAR
21
21a
INCR
DET
43
41
39
END OF BLOCK

BLOCK USAGE REGISTER
0--------15
BUR
25
MASK
LEFT MOST ONE SCAN
35
ENCODER
37

EN BUR | BLK RE USE | PCR
31
47
ADDR CONTROL
33
45

ADDRESS LOGIC CONTROL

## FIG.3

64K RAM IN 4K BLOCKS

| 1 | 2 | 3 | 4 |
| 5 | 6 | 7 | 8 |
| 9 | 10 | 11 | 12 |
| 13 | 14 | 15 | 16 |

PORT 1 ADDRESS REG | PORT 2 ADDRESS REG
21 | 23
18 | 20
16
CONTROL BUS ADAPTER
15 — CONTROL BUS

BLOCK AVAILABILITY VECTOR

| 1 | 1 | 1 | 0 | 1 | 1 | 1 | 0 | 0 | 0 | ooo | 1 | 1 |
| 1 | 2 | 3 | 4 | 5 | 6 | 7 | 8 | 9 | 10 | | 15 | 16 |

CONVERT LOC (4,8,9,10)

| 0 | 0 | 0 | 1 | 0 | 0 | 0 | 1 | 1 | 1 | ooo | 0 | 0 |
| 1 | 2 | 3 | 4 | 5 | 6 | 7 | 8 | 9 | 10 | | 15 | 16 |

STARTING ADDRESS OF BLOCK

0 = AVAILABLE
1 = OCCUPIED

EXAMPLE
  IF FILE = NX RECORD LENGTH; N=5
  AND RECORD = 3K BYTES
  THEN FILE = 5X3K = 15K: = 4 BLOCKS

## FIG.4